Europäisches Patentamt

**European Patent Office**

Office européen des brevets

(11) Publication number: **0 115 960**
A1

(12) # EUROPEAN PATENT APPLICATION

(21) Application number: **84300647.9**

(22) Date of filing: **02.02.84**

(51) Int. Cl.³: **F 16 D 65/60,** F 16 D 66/02

(30) Priority: **03.02.83 GB 8302914**

(43) Date of publication of application: **15.08.84**
**Bulletin 84/33**

(84) Designated Contracting States: **AT BE CH DE FR IT LI NL SE**

(71) Applicant: **WESTINGHOUSE BRAKE AND SIGNAL COMPANY LIMITED, Pew Hill, Chippenham Wiltshire (GB)**

(72) Inventor: **Tregoning, Geoffrey Robinson, Whitegate Stanley Lane, Pewsham Chippenham Wiltshire, SN15 3RF (GB)**

(74) Representative: **Page, Edmund John et al, PAGE & CO Temple Gate House Temple Gate, Bristol BS1 6PL (GB)**

(54) **Automatic slack adjuster Mk.II.**

(57)    This invention relates to an automatic slack adjuster particularly but not exclusively for automative vehicle braking systems. In the slack adjuster, input member A and hub 1 are coupled to output member 2 by a main clutch driven ring 13 mounted on output member 2 by helical threads 13A.

The hub 1 is also coupled via a fine toothed positive sensor clutch to clearance control mechanism. This sensor clutch comprises an innerclutch ring 3, fixed to hub 1, and an outer clutch plate consisting of fine toothed inner ring 4 and co-operating with ring 8 with a predetermined degree of lost motion. Ring 8 acts as a ground datum for clearance control.

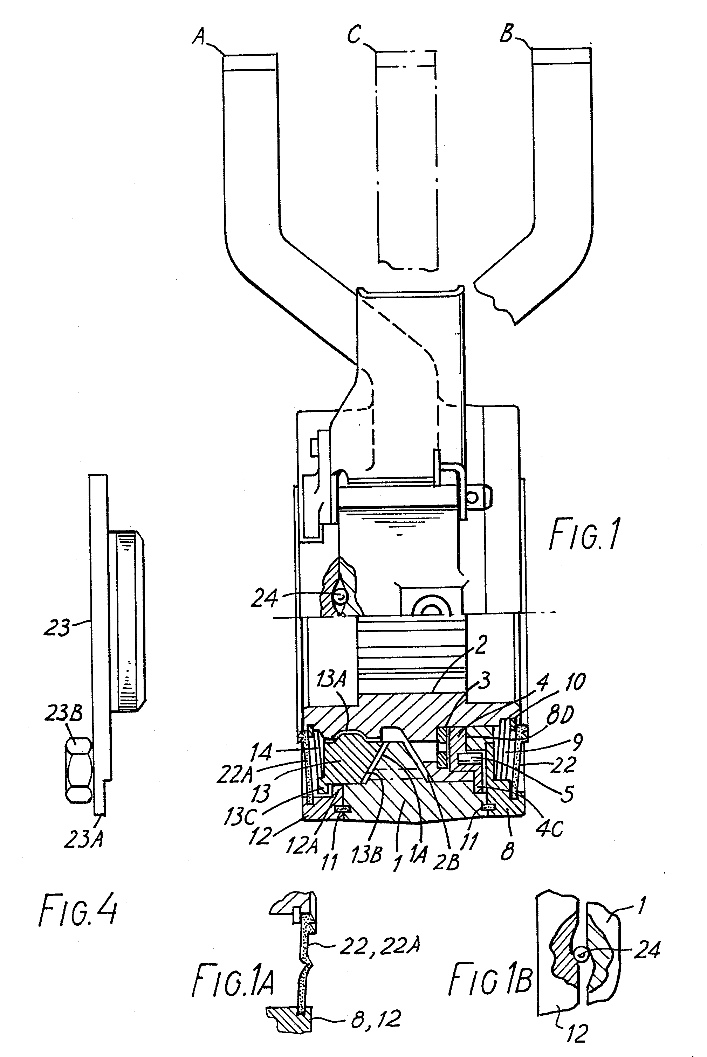

Moving input lever A out of the paper as shown in Fig. 1 produces a rotation in a sense which with a right-hand helix angle spindle will urge clutch 13 into more intimate engagement with hub 1 generating an axial force towards the right of Fig. 1 which is fed through ground datum ring 8 and into sensor clutch spring 9 tending to urge them to the right permitting disengagement of fine clutch teeth T on ring 4 from clutch teeth formed directly in a recess in hub 2. There may be for example 720 fine teeth similar to conventional file teeth.

Automatic Slack Adjuster Mk.II

This invention relates to automatic slack adjuster mechanisms and particularly but not exclusively to such mechanisms for heavy road vehicles.

In our U.K. patent specification No. 2 088 979A (Case 4030) is described such an automatic slack adjuster mechanism which includes an input member pivotable in opposite directions about an axis to apply and release respectively a brake-applying force; an output member also pivotable in opposite directions about the axis to transmit said force to brake applying means; a force transmitting member threadedly engaged around the output member and having a toothed clutch face engaged with a corresponding toothed clutch face on the input member, the threaded engagement of the force transmitting member and the output member being of such a sense that pivotal movement of the input member in a direction to apply a brake-applying force tends, by the force transmitting member being rotated with the input member through the two clutch faces, further to increase the force holding the two clutch faces in engagement and thereby move the input member in a first axial direction with the force transmitting member, and pivotal movement of the input member in the opposite direction to release the brake-applying force tends, because of the said sense of the said threaded engagement, to reduce the clutch engagement force thereby permitting the input member to move in an opposite axial direction with the force transmitting member; and brake clearance determining means having a clutch of at least two parts, the first part of which is fixed to the output member so as to be rotatable therewith and thereby, while the second part, normally drivingly engaged with the first. part, is permitted
limited lost motion with respect to a datum point on
some fixed part of the brake assembly, the limited lost
motion corresponding to a predetermined brake
clearance.

The stepless clutch is urged to disengage by movement
of the input member in the first axial direction (brake
force applied) and, urged by heavy clutch springs, is
permitted to re-engage by movement of the input member
in the opposite axial direction when effective brake
force disappears during brake release. Subsequent
release movement of the output member is limited, by
engagement of the first and second parts of the clutch,
to the preset lost motion between the second part and
the datum. Progressive rotational movement of the
first part of the clutch (and hence the output member)
relative to the second part, as brake wear takes place,
ensures that the brake release clearance remains
substantially constant for the life of the friction
material.

A problem arises in the use of this type of slack
adjuster when the brake cam shaft used in automotive
devices becomes sticky on release which may occur as
the result, for example, of tightness in manufacturing
tolerances or poor maintenance. If the cam shaft is
stiff the input lever has to pull the whole assembly
back via the torque transmitted through the engaged
stepless clutch, so that following reduction of braking
effect to zero, the correct running clearance is also
established. The problem is, to develop, with a plain
plate clutch, sufficient torque to pull the cam shaft
back to its original position when unusual cam shaft
resistance occurs.

To put more torque into the stepless sensor clutch shown in Patent Specification 2 088 979A would require a very large number of clutch plates (perhaps as many as 18). This is not a practical solution. In accordance with the present invention we use a positive clutch i.e. one with teeth which engage so as to ensure release in the occasional sticking situations. The positive clutch is employed to drive the output member a few degrees between the point of release and positive clearance of the brake shoes, utilising a drive torque derived from brake cylinder or other pull-off springs acting through the input lever, said torque augmenting the release torque normally developed in the brake cam shaft by virtue of the usual shoe pull-off springs.

Preferably the positive clutch employed in place of the stepless sensor clutch comprises a pair of clutch plates each equipped with fine teeth (of a type sometimes employed on files). There may for example be 10 teeth per $5°$ of clutch face. Use of very fine teeth whilst providing the required positive engagement also allows for a very fine degree of adjustment of the relative positions of the clutch faces.

Thus the primary feature of this invention lies in the use of a toothed clutch with multiple miniature teeth in place of the stepless clutch employed in our above-mentioned patent specification.

This arrangement provides a large number of small steps which are so small that, for practical purposes the toothed clutch functions like a stepless clutch but, at the same time, positive engagement is provided to enable the increased torque to be transmitted.

0115960

Preferably one of the toothed clutch plates is formed as a ring-like part with provision for lost motion between it and a co-operating part forming a ground datum, this datum part being axially free but non-rotatable with respect to some fixed part of the brake assembly.

Preferably the fixed clutch plate is a single ring but the movable clutch plate comprises a toothed inner ring having a radially outwardly extending wall or flange engageable via lugs with abutments in the input member and having limited lost motion with respect to a ground datum part.

The lost motion may be achieved by means of dowels which engage in half round holes in a first ring forming a portion of the clutch plate and in elongated arcuate slots in a second ring formed, alternatively, integral with or to be rigidly attachable to, the ground datum part.

To achieve variable amounts of lost motion the arcuate slots may be arranged around the perimeter of the second ring and the lengths of these slots may increase from one slot to the next around the perimeter. Thus it is possible to select any required degree of lost motion by engagement of a dowel in a half round hole opposite to an appropriate length arcuate slot.

Another feature is the use of a lever operating a ball and slot arrangement for release of the device.

In the accompanying drawings:- ("front", "rear" and "end" elevation references are merely to identify common directions of view in differing Figs.)

Fig. 1 is an end elevation partly in section of a rotary slack adjuster embodying the present invention;

Figs. 1A and 1B are scrap section of a detail;

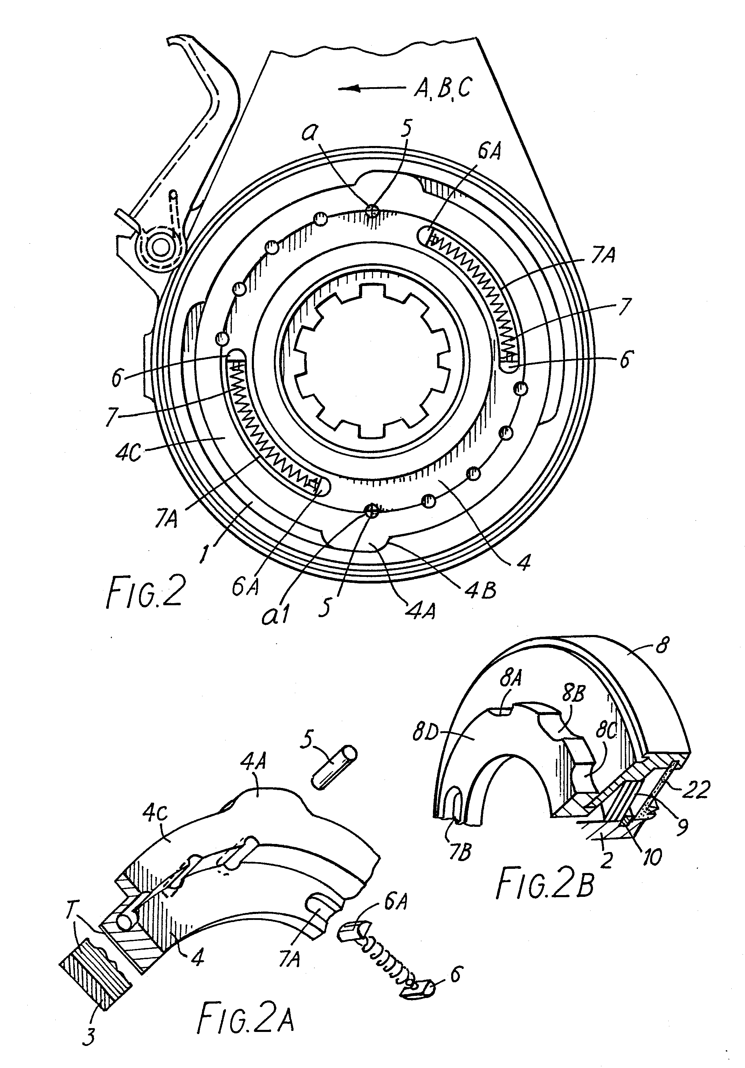

.Fig. 2 is a front elevation with parts removed, and partly in section, of the same slack adjuster;

Figs. 2A and 2B are enlarged isometric views of parts of Fig. 2;

Fig. 3 is a rear elevation of the same slack adjuster;

Fig. 4 is an end elevation of an indicator retainer cap which may be applied to either side of output hub according to "hand" of installation;

Fig. 5 is a "rear" elevation of a clearance setting ring;

Fig. 6 is an end elevation of the same ring;

Fig. 7 is an end elevation of an inner plate of a sensor clutch;

Fig. 8 is a front elevation of the same plate;

Fig. 9 is an end elevation of a typical rotary slack adjuster showing the indicator retainer cap in position on the "front" face of the unit and with an alternative form of reset lever;

Fig. 10 is a front elevation of the slack adjuster shown in Fig. 9, showing some of the alternative positions for the clearance datum arm.

As shown in Figs. 1 to 3 the slack adjuster has an input lever such as A, B or C, offset or straight. to suit installation requirements, (hereinafter referred to as input member A) and integral with a circular hub 1. Concentrically arranged within hub 1 is a splined output member 2 which may be splined to an automotive brake operating shaft (not shown).

Input member A and hub 1 are coupled to ouput member 2 by a force transmitting member in the form of a main clutch driven ring 13 mounted on output member 2 by helical threads 13A the sense of which is such that on movement of lever A out of the drawing as viewed in Fig. 1 the driven ring 13 tends to be urged to the right, increasing the engagement force between clutch teeth formed on face 13B on ring 13 and corresponding clutch teeth on face 1A on hub 1, these parts constituting the main clutch. Initial engagement force is maintained by a relatively light bias spring 14.

The hub 1 is also coupled via a fine toothed positive sensor clutch to clearance control mechanism. This sensor clutch comprises an inner clutch ring 3, fixed to or integrally manufactured with hub 1, and an outer clutch plate consisting of fine toothed inner ring 4 with a radially outwardly extending flange 4C, and co-operaing with ring 8 with a predetermined degree of lost motion. Ring 8 acts as a ground datum for clearance control. The sensor clutch is biassed through ring 8 at thrust face 8D by a multiple disc spring 9 reacting against a circlip 10 in the hub 1 and enclosed by a dirt excluder seal 22. A second seal 22A similarly protects the main clutch.

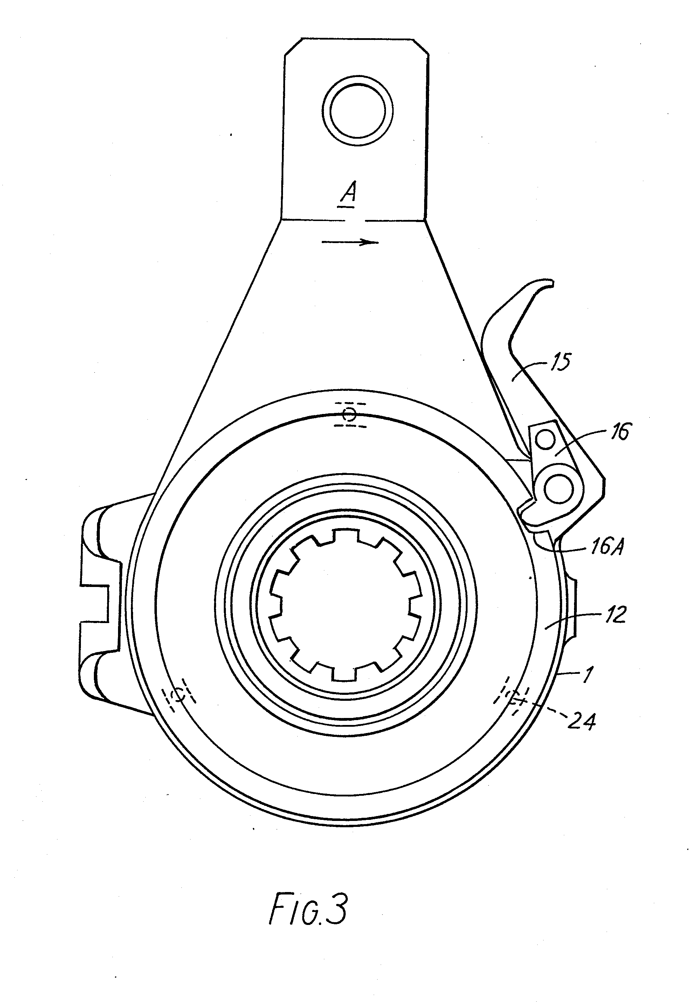

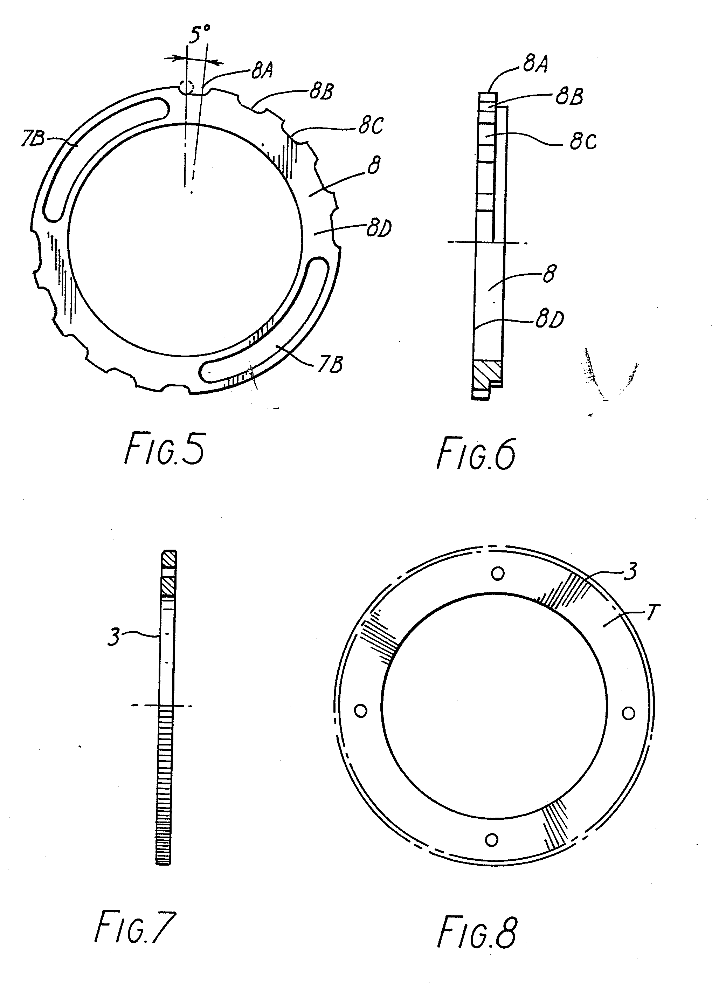

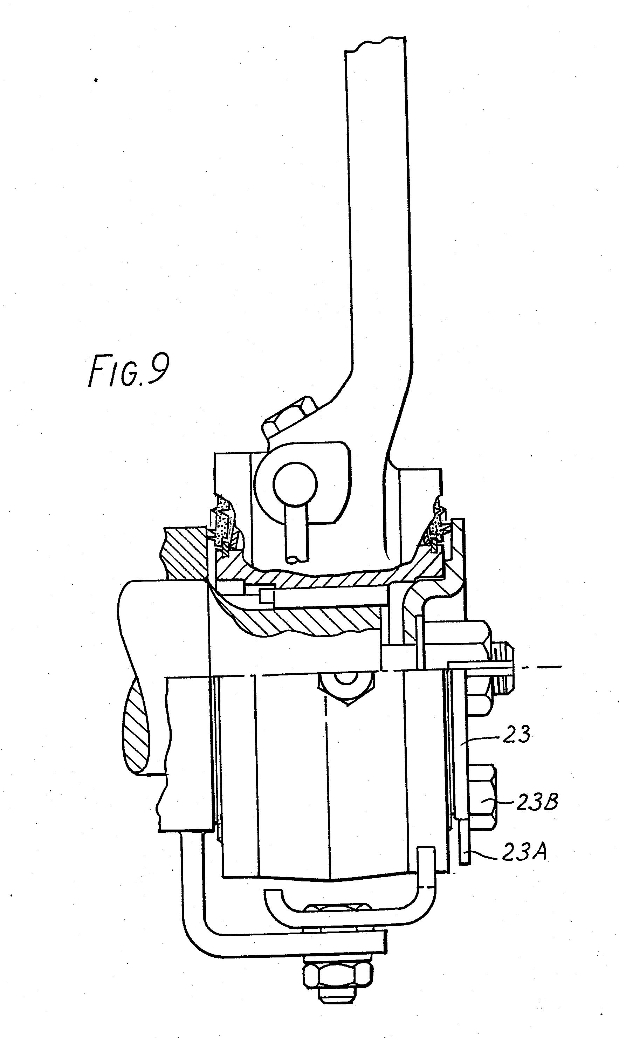

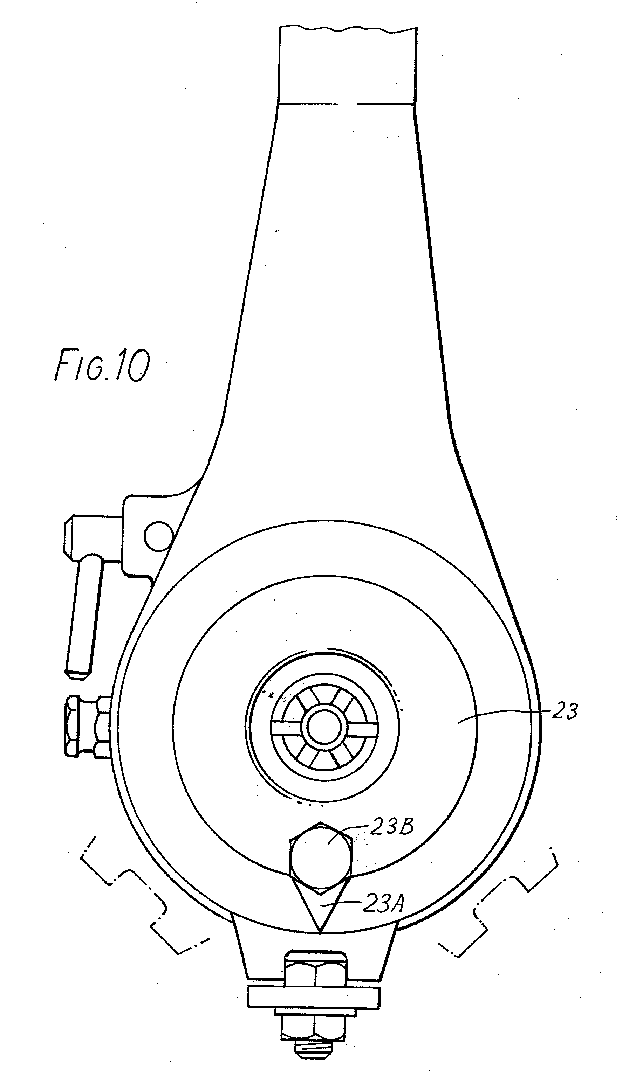

One side or other of the slack adjuster is closed, depending upon "hand" of mounting, by a wear indicator retainer cap 23 shown removed from the unit in Fig. 4. The cap carries a pointer 23A (Figs. 9, 10) to provide avisual indication of wear. The operation of the slack adjuster wear indicator and reset mechanism will be described in detail later, but resetting is initiated by a reset lever 15 (Fig. 3) which operates a reset cam 16 engaged in a slot 16A formed in reset ring 12.

The remaining details of the slack adjuster will be described in the course of describing operation of the device which now follows.

In the release condition input lever A and hub 1, the clutch driven ring 13 and the hub element 2, are all effectively a solid unit by virtue of teeth 13A on clutch ring 13 being urged by disc spring 14 into clutching engagement with teeth 1A on hub 1, by disc spring 14.

As mentioned above, the helix angle of the splines 13A is such that attempted rotation of input lever A in relation to output hub 2 tends either to urge more strongly into engagement the clutch teeth on ring 13 and hub 1, in the one direction, or to disengage the clutch overcoming the effect of clutch spring 14 in the other direction.

Considering now brake applications:-

Moving input lever A out of the paper as shown in Fig. 1 produces a rotation in a sense which with a right-hand helix angle spline will urge clutch 13 into more intimate engagement with hub 1 generating an axial force towards the right of Fig. 1 which is fed through ground datum ring 8 and into sensor clutch spring 9 tending to urge them to the right, to the extent of a small axial clearance 2B between hub 1 and output member 2, permitting disengagement of fine clutch teeth T on ring 4 from clutch teeth formed directly in a recess in hub 2 or in a pressed insert therein. Load is now applied, further axial movement to the right being prevented by abutment of the opposing conical faces formerly separated by clearance 2B.

The teeth T (Fig. 2A) are very fine teeth and mesh with corresponding fine teeth on hub 2 or on the pressed insert in hub 2. There may be for example an annular array of 720 fine teeth. The teeth are similar to conventional file teeth.

The force exerted by heavy disc springs 9 is such that axial movement of body 1 to the right as a result of vectored torque loads generated at the helical splines does not occur until effective brake force commences to build up on contact between brake linings and drums. Hence disengagement of clutch teeth 4 does not occur until this moment in brake application sequence.

It may be seen therefore that, prior to the moment of contact between linings and drums, force applied to the input lever causes the whole mechanism to move through the arc of brake clearance as though it were a solid lever and hub unit with the exception of ground datum assembly 8 which is fixed so as not to rotate relative to the vehicle brake backplate.

Considering Fig. 2, flange 4C of ring 4 has lugs 4A engageable in one direction with abutments 4B formed in hub 1 but free to rotate in the opposite direction by means of asuitable clearance provided in the hub.

Dowel pins 5 shown in positions a, al, for example only, appropriate to 5° clearance travel (Fig. 5), are firmly located in ring 4 but free to have limited rotational movement in slots formed in a boss projection of ground datum ring assembly 8. It will be seen from Fig. 5 and 6 that a number of slots 8A, 8B, 8C etc. of varying angular extent are provided. When assembled to the slack adjustor unit, ground datum ring, assembly 8 permits relative limited rotational movement of clutch ring 4 relative to ground datum assembly 8. Placement of earth datum dowels 5 during assembly will determine the amount of lost motion between he clutch ring 4 and the ground datum assembly 8. Dowels extend through to earth backplate with only a small axial clearance in order to ensure their positive retention in the locating holes in ring 4.

Springs 7, with their ends located on bolsters 6, 6A, half-housed in recesses 7A in clutch ring 4, engage via the bolsters similar recesses 7B in ground datum ring 8 and are positioned so that when assembled and set on the vehicle a constant light rotational urge in a brake application direction is applied to clutch ring 4 and serves to ensure ring 4 remaining in the correct position for re-engagement of the clutch faces at the moment of release, so that the correct clearance is achieved. In moving towards the full release position the abutments 4B on the hub 1 of the main input lever A engage lugs 4A on ring 4 and overcome the urge of the springs 7 so that in the release position a positive stop movement beyond full release is effected via abutments in input body, lugs on ring 4, dowels in engagement with the earth datum 8 and engagement of datum 8 relatively to the brake backplate.

Now considering the brake application from full release position, we have the following series of events:-

Initial input from brake operating cylinder rotates the whole assembly with the exception of earth datum assembly so that dowel pins 5 traverse the extent of clearance set according to the selection of the slots 8A, 8B, 8C etc. in ring 8. If correct brake clearance exists between lining and drum the moment of full travel of dowel pins 5, in selected slots, will coincide with the moment of contact between lining and drum.

On effective brake force being detected by the helically mounted clutch assembly the hub 1 will be urged (as described above) so as to disengage clutch ring 4 from teeth in hub 2. Further movement of the brake lever arising from elasticity in the brake rigging system will result in gaps opening between lugs on ring 4 and their respective abutments on the main body 1. Ring 4 urged by springs 7 will remain in position with dowels 5 abutting the extreme ends of the appropriate clearance slots and will remain in this position for the whole time in which brake force is being applied so that the clutch ring 4 is entirely unaffected by any movement due to elasticity of the rigging.

On commencement of the release part of the braking cycle, reducing input from brake actuating cylinder will permit recovery of elastic strain portion of brake movement. At the moment of release i.e. the linings are instantaneously about to leave the drums, and assuming no detectable wear to have occurred during brake application, the torque loading through the helix between the hub 2 and clutch 13 will simultaneously fall to a low level, thus permitting heavy springs 9 to return hub 1 to the left in Fig. 1. This causes re-engagement under spring load of clutch ring 4 with teeth in the hub 2. Further movement in the release direction will drive the clutch ring 4 towards release, by virtue of the re-engagement of lugs on the ring or abutments in the body until dowels 5 again abut the release ends of the slots in the ground datum assembly 8. Since clutch ring 4 became drivingly engaged with output member 2 at the moment of brake release, and clutch ring 4 can (by virtue of slots in ground datum ring 8) only move back by its correct clearance, then the hub 1 also drivingly engaged with the clutch 4 can only move through the correct clearance angle. The above description assumes correct clearance to exist at the commencement of braking and there has been no significant i.e. detectable wear during brake application.

Considering first wear during brake application, the sequence of events up to the moment of the linings contacting the drums is as described above. Wear taking place during brake application will result in lever movement beyond the position of initial lining/drum contact over and above any movement due to elasticity. During release, because of wear that has occurred, the point at which the linings leave the drums will be a point further in the application direction than that at which they originally contacted the drums. Since this point is the point of engagement of clutch 4 and output member 2, the output member 2 again can only move by correct clearance as limited by slots selected, but because of the wear when the output member 2 has reached the full release position from the point of departure from the lining/drum datum, then the lever will still not have retained full release position.

Continuous retraction of the conventional operating cylinder push rod, not shown, urged by the conventional piston return spring will urge the lever in a release direction so causing clutch ring 13, urged by the helical spline, to disengage from the teeth in lever 1 permitting the lever to rotate via a ratcheting action until it too has regained full release position.

Hub splines engaging brake cam shaft will have been rotated in a brake application direction relative to input lever by an amount equivalent to wear occurring during brake application.

Considering now the excess clearance existing prior to brake application e.g. after backing off brake cam fully to reline brake shoes, lever movement in the brake application direction will cause the dowels 5 to strike the extreme ends of their appropriate clearance slots before brake linings have contacted drums. This will cause a reactive torque to be fed back through the mechanism which will be sensed by helically splined clutch ring in the same manner as the brake reaction torque when clearance is correct. As braking force continues to build up the increasing torque reaction will tend to overcome the force of springs 9 until a force balance is achieved which permits clutch teeth on ring 4 just to disengage so permitting movement of the hub relatively to the ring 4 and hence earth datum 8. This event is for all practical purposes virtually instantaneous and incurs no effective delay in application of brakes.

Brake lever and hub movement continue until the shoe lining/drum contact is achieved when reactive torque increases sharply, fully disengaging clutch teeth 4 from those in body 2. Further operation through brake elasticity and release is exactly as the above described operation.

Resetting

The essential function in enabling the hub and spline rotation to the new linings position from the attained fully worn position, is the release simultaneously of both main drive and sensor clutches. Reset ring 12 (Fig. 1) has a shouldered abutment 12A engaging a matching thrust face 13C on clutch ring 13 such that movement of ring 12 to the left in Fig. 1 will cause engagement of abutting thrust faces urging clutch ring 13 out of engagement with hub 1. Axial movement of ring 12 to effect this declutching operation is achieved by rotation of ring 12 relatively to hub 1, causing three hardened steel balls 24 (Figs. 1, 1B and 3) to interact with matching cam profiles in ring 12 and hub 1 thus forcing ring 12 axially away from the hub 1. Ingress of dirt or other foreign matter during this and all other operations is prevented by sealing strips 11 mounted in facing grooves on body 1, ring 12 and ring 8 together with seal elements 22, 22A located annularly between rings 8 and 12 and the respective spigots on the output member.

Initial rotation of ring 12 having disengaged main drive clutch, further rotation urges hub 1 to the right in Fig. 1 by virtue of the abutment of clutch ring 13 against spring 14 and retaining circlip thereof. Rightward movement of hub 1 further increases disengagement of clutch ring 13 and clutch teeth in the hub, at the same time urging ground datum ring 8 to the right against the urge of the heavy clutch springs 9.

The removal of loading from thrust face 8D and the clearance achieved by rightward movement of ring 8 leaves clutch 4 free to disengage from hub 2 when the latter is rotated relative to clutch 4, the teeth of which are so shaped as to provide the requisite small axial reaction force when relative torque exists between clutch 4 and output member 2.

Rotational movement of ring 12 is effected via a lever 15, connected to a cam 16, (Fig. 3) journalled on a lug on hub 1. Assuming brake cam shaft assembly to be free in the brake backplate housing, and brake pull-off springs to be of sufficient power, then the brake cam shaft should return to the reline position by a "fly-back" action on operation of lever 15. Semi-rotary lever 15A (Figs. 9 and 10) is an alternative method of operating reset ring 12 via internal cam and peg mechanism (not shown).

The adjuster assembly is retained on brake cam shaft by a wear indicator/reset cap (item 23) (Figs. 4 and 10). This is lockingly engaged in a predetermined position relatively to the hub when the slack adjuster is assembled to the vehicle and is formed with a pointer 23A indicating progress of brake wear as it rotates with the hub relatively to the input lever.

The cap also carries a hexagon nut 23B which, in case of sluggish brake cam shaft action, may be engaged by a ring spanner then used as a lever to return the brake output member and cam assembly to the reline position. Release of lever 15 and removal of the spanner automatically leaves the slack adjuster in the full operational condition.

A further improvement over known rotary slack adjusters is the provision of two elastomeric annular dirt excluders 22, 22A (Figs. 1 and 1A), rotatably and sealingly engaged in annular recesses in rings 8 and 12 and further sealingly engaged with the outer spigot diameters of output member 2. The outer face of each dirt excluder is provided, towards the inner diameter, with preferably at least two annular and outwardly extending seal lips which are compressed axially between respectively the inner face of retainer cap 23 and a shoulder or abutment washer on the brake cam shaft, when mounted to the shaft for operation. Thus these seals not only protect the mechanism of the slack adjuster from contamination by foreign matter but also protect the splined end of the cam shaft from water and dirt which in conventional slack adjusters are known to lead to corrosion and consequent difficulties in removal for servicing or replacement. "Tell-tale" vents are provided in the annular faces of the seals to prevent displacement by internal pressure when lubricant is applied in service, these acting also to indicate adequate application by exudation of excess lubricant from the vents. The form of the vents is such as to resist ingress of external deleterious matter.

Claims:

1. An automatic slack adjuster mechanism which includes an input member (A,1) pivotable in opposite directions about an axis to apply and release respectively a brake-applying force; an output member (2) also pivotable in opposite directions about the axis to transmit said force to brake applying means; a force transmitting member (13) threadedly engaged around the output member and having a clutch face (13B), engaged with a corresponding clutch face (1A) on the input member (1), and brake clearance determining means having a clutch (3, 4), a first part (3) of said clutch being fixed to the output member (1), a second part (4) of said clutch, normally drivingly engaged with the first part, being permitted limited lost motion with respect to a datum point on a fixed part (8) of the brake assembly, the limited lost motion corresponding to a predetermined brake clearance, said clutch (3, 4) being a positive clutch.

2. An automatic slack adjuster according to Claim 1 and in which the positive clutch (3, 4) is employed to drive the output member (2) a few degrees between the point of release and positive clearance of the brake shoes, utilising a drive torque derived from brake cylinder or other pull-off springs acting through the input member, said torque augmenting the release torque normally developed in the brake cam shaft by virtue of the usual shoe or other pull-off springs.

3. An automatic slack adjuster according to Claim 1 or Claim 2 and in which said positive clutch comprises a pair of clutch plates (3, 4) each equipped with fine teeth (T).

4.  An automatic slack adjuster according to Claim 3 in which there are at least 10 teeth per $5^{\circ}$ of clutch face.

5.  An automatic slack adjuster according to Claim 1 and in which said positive clutch (3, 4) is a toothed clutch with multiple miniature teeth (T) providing a large number of small steps which are so small that, for practical purposes, the toothed clutch functions like a stepless clutch but, at the same time, positive engagement is provided to enable increased torque to be transmitted.

6.  An automatic slack adjuster according to Claim 3 or Claim 4 in which said one of the toothed cluch plates (4) is formed as a ring-like part with provision (7A) for lost motion between it and a co-operating part (8) forming a ground datum, the datum part (8) being axially free but non-rotatable with respect to some fixed part of a brake assembly with which the adjuster is used.

7.  An automatic slack adjuster according to Claim 6 and in which one of the clutch plates (3) is fixed and is a single ring, and the other clutch plate (4) is movable and comprises a ring (4C) having a radially outwardly extending wall or flange engageable, via lugs (4A), with abutments (4B) on the input member (1) and having limited lost motion with respect to the ground datum part (8).

8.  An automatic slack adjuster according to Claim 6 or Claim 7 and in which the lost motion is achieved by means of dowels (5) which engage in half round holes in a first ring (4C) forming a portion of one clutch plate and in elongated arcuate slots (8A, 8B) in a second ring formed, alternatively, integral with or rigidly attached to, the ground datum part (8).

9. An automatic slack adjuster according to Claim 8 and in which, to achieve variable amounts of lost motion, the arcuate slots (8A, 8B) are arranged around the perimeter of the second ring (8) and the lengths of these slots (8A, 8B) increase from one slot to the next around the perimeter whereby it is possible to select any required degree of lost motion by engagement of a dowel (5) in a half round hole opposite to an appropriate length arcuate slot.

10. An automatic slack adjuster according to any preceding claim and including a lever (15) operating a ball and slot arrangement for release of the lost motion device.

11. An automatic slack adjuster according to any preceding claim when used in a brake mechanism for a heavy road vehicle.

0115960

1/6

FIG.1

FIG.4

FIG.1A

FIG.1B

A,B,C

FIG.2

FIG.2A

FIG.2B

FIG.3

5°

8A
8B
8C
8
8D
7B
7B

**FIG.5**

8A
8B
8C
8
8D

**FIG.6**

3

**FIG.7**

3
T

**FIG.8**

5/6

0115960

FIG.9

23

23B

23A

FIG.10

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A,D | GB-A-2 088 979 (WESTINGHOUSE) <br> * Whole document * | 1 | F 16 D 65/60 <br> F 16 D 66/02 |
| A | GB-A-1 538 848 (CLAYTON DEWANDRE) | | |
| A | US-A-2 697 497 (SHIVELEY) | | |
| A | US-A-2 385 621 (FREEMAN) | | |
| A | GB-A-1 394 666 (AUTOIPARI) | | |
| A | FR-A-2 414 151 (WESTINGHOUSE) | | TECHNICAL FIELDS SEARCHED (Int. Cl. ³) <br><br> F 16 D 65/00 <br> F 16 D 66/00 |

The present search report has been drawn up for all claims

| Place of search | Date of completion of the search | Examiner |
|---|---|---|
| THE HAGUE | 10-05-1984 | HARTEVELD C.D.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82